# FASCICULE DE BREVET EUROPEEN

(11) **EP 2 874 975 B1**
(45) Date de publication et mention de la délivrance du brevet: **12.09.2018**
(21) Numéro de dépôt: 13756563.6
(22) Date de dépôt: 12.07.2013
(51) Int. Cl.: C04B 37/00, B82Y 30/00

(54) **PROCEDE DE BRASAGE DE PIECES EN MATERIAU COMPOSITE A MATRICE CERAMIQUE AVEC ANCRAGE DU JOINT DE BRASURE**
VERFAHREN ZUM HARTLÖTEN VON TEILEN AUS EINEM KERAMISCHEN MATRIXVERBUNDMATERIAL MIT VERANKERUNG DER LÖTVERBINDUNG
METHOD FOR BRAZING PARTS MADE FROM A COMPOSITE CERAMIC MATRIX MATERIAL, WITH ANCHORING OF THE BRAZED JOINT

(30) Priorité: 18.07.2012 FR 1256947
(43) Date de publication de la demande: 27.05.2015
(73) Titulaire: Safran Ceramics, 33185 Le Haillan (FR); Commissariat à l'Energie Atomique et aux Energies Alternatives, 75015 Paris (FR)
(72) Inventeur: REVEL, Thomas, F-33000 Bordeaux (FR); CONETE, Eric, F-33700 Merignac (FR); PHILIPPE, Eric, F-33700 Merignac (FR); CHAUMAT, Valérie, F-38760 St Paul De Varces (FR)
(74) Mandataire: Desormiere, Pierre-Louis
(86) Numéro de dépôt international: PCT/FR2013/051671
(87) Numéro de publication internationale: WO 2014/013165

(56) Documents cités:
- WO-A1-2006/010814
- WO-A1-2011/029785
- WO-A1-2011/029785
- WO-A1-2011/113760
- WO-A1-2011/113760

## Description

### Arrière-plan de l'invention

L'invention concerne l'assemblage par brasage des matériaux composites thermostructuraux, les matériaux composites à matrice céramique (CMC). Les matériaux CMC sont typiquement formés d'un substrat poreux, tel qu'un substrat fibreux poreux densifié par une matrice céramique. Les fibres du substrat peuvent être en carbone ou céramique. La matrice est en une céramique réfractaire telle que, par exemple, carbure, nitrure, borure ou oxyde réfractaire. Les matériaux CMC, comme, par exemple, les composites C/SiC (renfort en fibres de carbone et matrice en carbure de silicium), sont remarquables par leurs propriétés mécaniques, qui les rendent aptes à constituer des éléments de structure, et par leur capacité à conserver ces propriétés à des températures élevées.

Lors de la réalisation de structures en matériaux composites à matrice céramique, il est fréquent de réaliser celles-ci à partir d'éléments en matériaux CMC indépendants qui sont assemblés entre eux par brasage. Toutefois, le brasage des matériaux composites à matrice céramique est techniquement difficile et la contrainte à rupture du joint de brasure est souvent insuffisante vis-à-vis des efforts, en particulier de cisaillement, auxquels l'assemblage peut être soumis.

Les pièces en matériaux CMC présentent une forte rugosité en surface qui empêche une bonne répartition de la brasure dans la zone de formation du joint de brasure créant ainsi des zones de faiblesse dans la liaison brasée.

En outre, lors de la diffusion de la brasure entre les faces d'assemblage des pièces à braser, il se produit un dégagement d'espèces gazeuses dues à la réaction entre la brasure et les particules céramiques utilisées pour transporter la brasure par capillarité entre les faces d'assemblage. Une partie de ces espèces gazeuses sont emprisonnées à l'intérieur du joint de brasure, ce qui conduit à un joint de brasure poreux dans lequel subsistent localement des portions sans brasure entre les deux surfaces. Ce manque de matière entraîne des défauts dans la liaison entre les deux pièces et, par conséquent, une dégradation de la qualité de l'assemblage qui fragilise la liaison réalisée.

Des procédés d'assemblage par brasage de pièces en matériau composite sont divulgués dans les documents WO 2011/113760. WO 2011/029785 et WO 2006/010814. Le document WO2006/010814 essaie de résoudre le même problème que dans la demande, l'évacuation des espèces gazeuses produites lors du traitement thermique de brasage.

### Objet et résumé de l'invention

L'invention a pour but de fournir un procédé permettant un assemblage par brasage entre des pièces en matériau composite à matrice céramique (CMC) qui ne présente pas les inconvénients précités, notamment qui permet un meilleur ancrage du joint de brasure dans le matériau des pièces ainsi que l'évacuation des espèces gazeuses produites lors du traitement thermique de liquéfaction et de diffusion de la brasure. L'invention a également pour but de proposer une solution de brasage qui permet de contrôler la présence du joint de brasure en différents points de la liaison et de s'assurer ainsi de sa présence sur l'ensemble de la zone où le joint de brasure doit être formé.

Ce but est atteint avec un procédé dans lequel, conformément à l'invention, on réalise une pluralité de cavités sur la face d'assemblage d'au moins une des deux pièces en matériau composite, tout ou partie de ces cavités débouchant sur une ou plusieurs parties de la pièce situées en dehors de la face d'assemblage, une brasure fondue étant transportée par capillarité sur toute la zone de brasage au moyen d'éléments capillaires disposés entre les faces d'assemblage des pièces en matériau composite caractérisé en ce qu'une pluralité de rainures est réalisée sur la face d'assemblage d'au moins une des deux pièces en matériau composite, au moins une partie desdites rainures comportant des perforations débouchant sur la face opposée à la face d'assemblage de la pièce.

Ainsi, grâce à la présence de cavités sur au moins une des faces d'assemblage des pièces en matériau composite, il est possible d'ancrer solidement le joint de brasure dans le matériau de la pièce tout en permettant un dégazage lors du cycle de brasure, les espèces gazeuses étant évacuées par les extrémités des cavités débouchant en dehors des faces d'assemblage.

En outre, la présence de brasure à différents endroits de la zone de formation du joint de brasure peut-être contrôlée par une simple inspection visuelle à partir des extrémités des cavités débouchant en dehors des faces d'assemblage. En effet, l'absence partielle ou totale de brasure dans une ou plusieurs des cavités indiquerait que le joint de brasure n'a pas été formé de manière uniforme sur l'ensemble de la zone de brasage et que la liaison peut alors comporter des zones de faiblesse.

Selon un premier aspect de l'invention, une pluralité de rainures est réalisée sur la face d'assemblage d'au moins une des deux pièces en matériau composite, au moins une partie desdites rainures débouchant sur une ou plusieurs faces adjacentes à la face d'assemblage de la pièce.

Selon un deuxième aspect de l'invention, au moins une partie des rainures s'étend sur la face d'assemblage de la pièce suivant une direction déterminée perpendiculaire à la direction des efforts auxquels la pièce est destinée à être soumise.

Selon un troisième aspect de l'invention, une partie des rainures s'étend sur la face d'assemblage de la pièce suivant deux directions déterminées perpendiculaires l'une par rapport à l'autre.

Selon un quatrième aspect de l'invention, une pluralité de perforations est réalisée sur la face d'assemblage d'au moins une des deux pièces en matériau composite, au moins une partie desdites perforations débouchant sur la face opposée à la face d'assemblage de la pièce.

Selon un cinquième aspect de l'invention, les éléments capillaires sont choisis parmi au moins un des éléments suivants : particules de SiC, voile de SiC, mat de carbone, particules de carbone et nanotubes de carbone.

Selon un sixième aspect de l'invention, les pièces en matériau composite à assembler par brasage sont des pièces d'arrière-corps de moteur aéronautique.

Selon un septième aspect de l'invention, la composition de brasure est une composition métallique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- les figures 1A à 1E montrent schématiquement le brasage de deux pièces en matériau composite à matrice céramique conformément à un mode de réalisation de l'invention,
- la figure 2 est une vue schématique en perspective d'une pièce axisymétrique destinée à être brasée et comportant des rainures et perforations conformément à un autre mode de réalisation de l'invention ;
- la figure 3 est une vue schématique en perspective d'une pièce destinée à être brasée et comportant des rainures s'étendant suivant deux directions perpendiculaires conformément à un autre mode de réalisation de l'invention ;
- la figure 4 est une vue schématique en perspective d'une pièce destinée à être brasée et comportant des rainures s'étendant suivant une première direction, les rainures comportant des portions s'étendant dans une seconde direction perpendiculaire à la première direction conformément à un autre mode de réalisation de l'invention ;
- la figure 5 est une vue schématique en perspective de deux pièces destinées à être brasées ensemble et comportant chacune des perforations conformément à un autre mode de réalisation de l'invention.

### Description détaillée de mode de réalisation

Le procédé d'assemblage par brasage selon la présente invention s'applique à tout type de matériau composite thermostructural à matrice céramique (CMC), c'est-à-dire à tout matériau formé d'un renfort en fibres réfractaires (carbone ou céramique) densifié par une matrice céramique elle aussi réfractaire, tels que des matériaux C/SiC, SiC/SiC, C/C-SiC, etc. Cette méthode s'applique en outre à d'autres types de matériaux susceptibles de dégager des espèces gazeuses lors du brasage tels que les matériaux C/C ou les céramiques monolithiques telles que SiC, SiSiC, carbone vitreux ou pyrocarbone.

Conformément à l'invention, des cavités sont formées sur la face d'assemblage d'au moins une des deux pièces en matériau composite à assembler, au moins une partie de ces cavités débouchant sur une ou plusieurs faces ou parties de la pièce situées en dehors de la face d'assemblage.

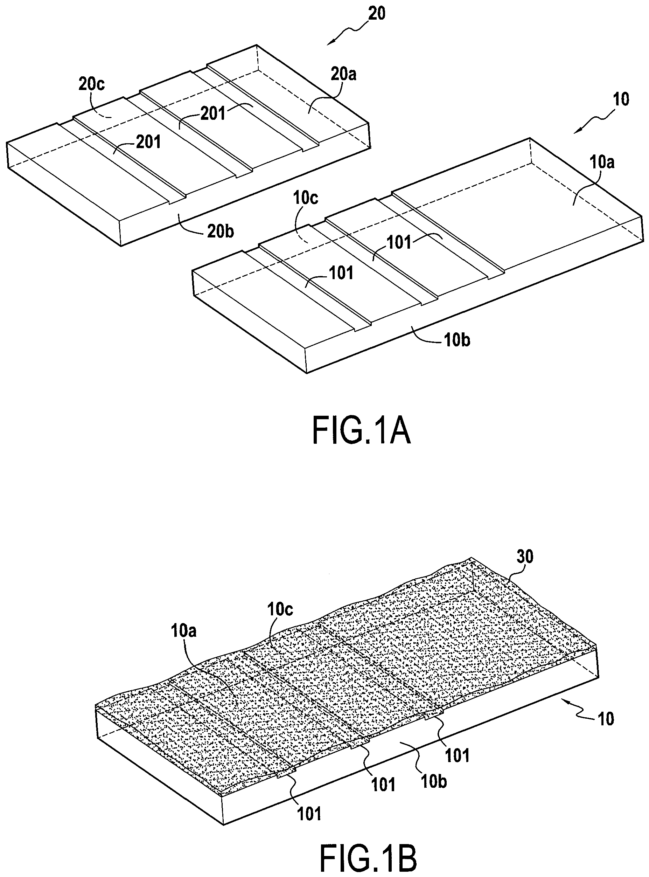

En référence aux figures 1A à 1E, un mode de mise en oeuvre d'un procédé conforme à l'invention, pour l'assemblage par brasage de deux pièces 10 et 20 en matériau CMC, comprend les étapes suivantes.

Comme illustré sur la figure 1A, la première étape consiste à réaliser des cavités sur les faces d'assemblage 10a et 20a des deux pièces 10 et 20. Plus précisément, dans l'exemple décrit ici, des rainures 101 sont usinées sur la face d'assemblage 10a de la pièce 10 tandis que des rainures 201 sont usinées sur la face d'assemblage 20a de la pièce 20. Les rainures 101 débouchent respectivement sur les faces latérales 10b et 10c de la pièce 10 tandis que les rainures 201 débouchent respectivement sur les faces latérales 20b et 20c de la pièce 20.

On dispose ensuite des éléments capillaires, ici des particules de SiC 30, sur la face de collage 10a de la pièce 10 (figure 1B). Les particules de SiC sont destinées à permettre le transport et la diffusion de la brasure liquéfiée entre les deux pièces 10 et 20 lors de l'opération de brasage. D'autres éléments capillaires comme notamment un voile de SiC, un mat de carbone, des particules de carbone ou des nanotubes de carbone peuvent être utilisés.

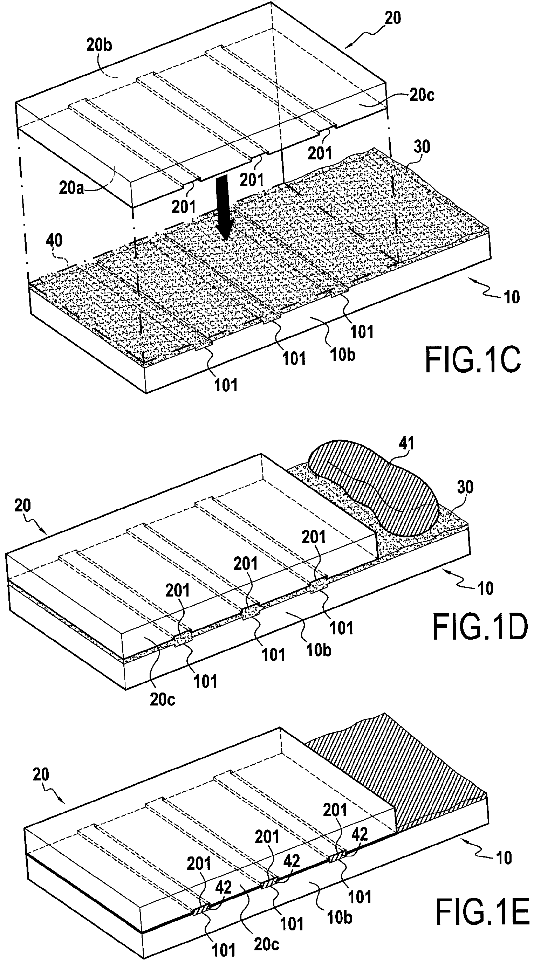

La pièce 20 est alors positionnée sur la pièce 10 de manière à mettre en regard les faces d'assemblage 10a et 20a (figure 1C). La zone délimitée par la réunion des parties des faces de collage 10a et 20a en regard correspond à la zone de brasage 40, c'est-à-dire la zone sur laquelle doit être formé le joint de brasure. Une composition de brasure 41 sous forme d'une pâte solide est placée sur la face de collage 10a en dehors de la zone de brasage 40 en contact avec les particules de SiC 30 présentes à l'extérieur de la zone de brasage 40 (figure 1D). Le choix de la brasure est effectué notamment en fonction de sa compatibilité avec le matériau composite des pièces à assembler, c'est-à-dire qu'on choisit de préférence une composition non réactive ou à réactivité contrôlée avec le matériau composite et ayant un coefficient de dilatation thermique proche de celui du matériau composite. On utilisera par exemple des compositions à base de silicium telles que décrites dans les documents EP 806 402, US 5 975 407, US 2008/190552 et US 7 497 918 des alliages de silicium+siliciures métalliques, du silicium+germanium allié ou non, ainsi que des compositions métalliques connues sous le nom commercial Cusil-ABA®, Ticusil®, Incusil® ou Brasic®.

On peut également utiliser des compositions correspondant à des mélanges d'oxydes choisis parmi les oxydes suivants : SiO₂, Al₂O₃ et MgO.

L'étape suivante consiste à élever la température jusqu'à rendre liquide la brasure 41 qui est alors aspirée par capillarité par les particules de SiC 30 et répartie sur toute la zone de brasage 40 présente entre les deux pièces 10 et 20. Les espèces gazeuses produites lors de ce traitement thermique sont évacuées par les rainures 101 et 201 au niveau de leurs parties débouchant respectivement sur les faces latérales 10b, 10c, 20b et 20c des pièces 10 et 20.

Comme illustré très schématiquement sur la figure 1E, on obtient ainsi un joint de brasure 42 en contact avec les faces d'assemblage 10a et 20a des deux pièces 10 et 20. Les rainures 101 et 201 formant en outre des portions d'ancrage du joint de brasure 41 dans le matériau composite des pièces, ce qui permet de renforcer la liaison brasée entre les deux pièces.

En outre, grâce à la formation préalable des rainures 101 et 201, la présence de brasure à différents endroits de la zone de brasage peut-être contrôlée par une simple inspection visuelle à partir des parties des rainures débouchant sur les faces latérales des pièce. En effet, l'absence partielle ou totale de brasure dans une ou plusieurs rainures indiquerait que le joint de brasure n'a pas été formé de manière uniforme sur l'ensemble de la zone de brasage et que la liaison peut alors comporter des zones de faiblesse. Suivant les conditions d'utilisation des pièces assemblées, il peut être défini un nombre et/ou une étendue de zones de faiblesse acceptables en-dessous desquels le joint de brasure n'a pas besoin d'être repris.

Le nombre, l'orientation, la forme et les dimensions des rainures sur chaque face de collage des pièces en matériau composite peuvent être variées. A titre d'exemple, les rainures 101 et 201 décrites ci-avant peuvent présenter une largeur de 2 mm pour une profondeur de 0,3 mm et être espacées les unes des autres d'une distance de 6 mm. Des performations débouchant sur la face opposée à la face de collage de la pièce doivent également être usinées dans le fond des rainures afin d'ajouter des voies supplémentaires de dégazage et/ou de contrôle du joint de brasure.

L'orientation des rainures est de préférence choisie de manière à former des portions d'ancrage dans le joint de brasure qui s'opposent aux principaux efforts auxquels l'assemblage est destiné à être soumis. Par exemple, les rainures peuvent s'étendre dans une direction sensiblement perpendiculaire à celle des efforts de cisaillement.

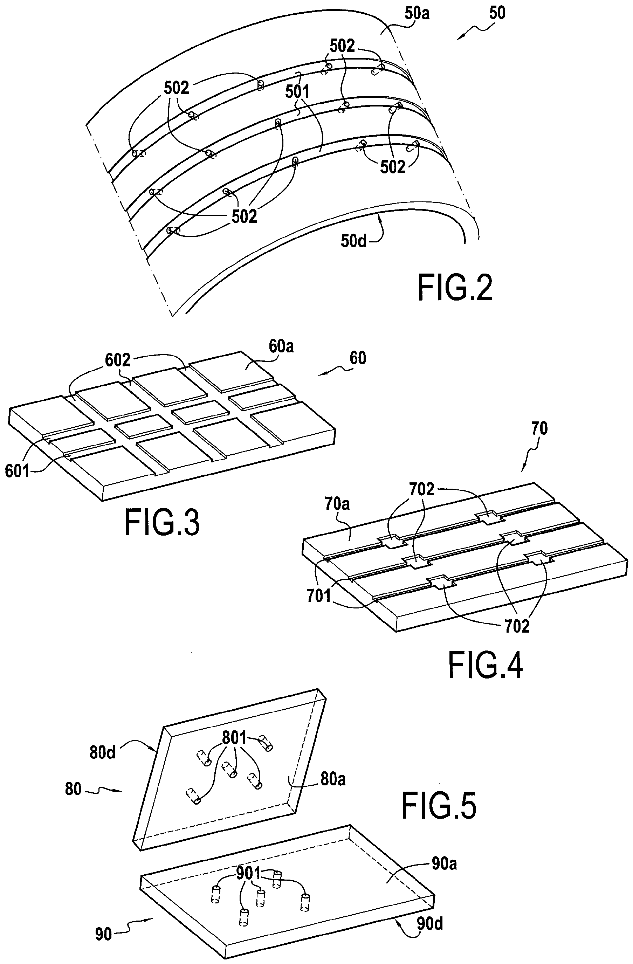

La figure 2 illustre une pièce 50 en matériau composite de forme axisymétrique, par exemple une pièce d'arrière-corps de moteur aéronautique, et comportant une face d'assemblage 50a destinée à être assemblée par brasage avec une autre pièce également axisymétrique (non représentée sur la figure 2) dans les mêmes conditions que celles décrites ci-avant. Conformément à l'invention, des rainures 501 sont usinées sur la face d'assemblage 50a de la pièce 50. Les rainures 501 sont orientés dans le sens circonférentiel de la pièce afin d'améliorer la tenue mécanique du joint de brasure, les portions d'ancrage ainsi formées par les rainures s'opposant aux efforts d'arrachement axiaux qui peuvent s'appliquer sur l'une ou les deux pièces. Dans cet exemple, les rainures 501 ne débouchent pas en dehors de la face d'assemblage de la pièce 50. Afin de permettre un dégazage et un contrôle du joint de brasure après brasage, des perforations 502 débouchant sur la face 50d opposée à la face d'assemblage 50a de la pièce sont en outre usinées dans le fond des rainures 501.

La figure 3 montre une pièce 60 comportant sur sa face de collage 60a une première série de rainures 601 s'étendant dans une première direction et une seconde série de rainures 602 s'étendant dans une seconde direction perpendiculaire à la direction d'extension des rainures 601. Dans le cas par exemple d'une pièce axisymétrique, ces deux séries de rainures permettent, pour l'une, de former des points d'ancrage s'opposant aux efforts d'arrachement axiaux et, pour l'autre, des voies de dégazage et de contrôle du joint de brasure.

La figure 4 montre une pièce 70 comportant sur sa face d'assemblage 70a des rainures 701 présentant des portions 702 s'étendant dans une direction perpendiculaire à la direction longitudinale d'extension des rainures 701 sur la pièce 70. Les portions 702 peuvent, dans ce cas, former des points d'ancrage s'opposant à des efforts appliqués dans une direction sensiblement perpendiculaire à la direction d'extension des portions 702 tandis que les rainures 701 assurent des voies de dégazage et de contrôle du joint de brasure.

Les cavités réalisées sur la face de collage des pièces peuvent également correspondre à des perforations. La figure 5 illustre deux pièces 80 et 90 en matériau composite destinées à être assemblées par brasage et comportant chacune sur leur face d'assemblage respective 80a et 90a des performations 801 et 901, ayant par exemple un diamètre de 1 mm et étant espacées les unes des autres de 1 à 2 mm environ. Les perforations 801 débouchent sur la face 80d opposée à la face d'assemblage 80a de la pièce 80 tandis que les perforations 901 débouchent sur la face 90d opposée à la face d'assemblage 90a de la pièce 90. Les perforations 801 et 901 permettent de former à la fois de points d'ancrage améliorant la résistance du joint de brasure formé ultérieurement et des voies de dégazage et de contrôle du joint de brasure.

## Revendications

1. Procédé d'assemblage par brasage de deux pièces (10, 20) en matériau composite à matrice céramique (CMC), chaque pièce comportant une face d'assemblage (10a, 20a) destinée à être brasée avec la face d'assemblage de l'autre pièce, le procédé comprenant les étapes suivantes :
- réalisation d'une pluralité de cavités (101 ; 201) sur la face d'assemblage (10a ; 20a) d'au moins une des deux pièces (10 ; 20) en matériau composite, au moins une partie desdites cavités débouchant sur une ou plusieurs parties (10b, 10c ; 20b, 20c) de la pièce situées en dehors de la face d'assemblage,
- interposition d'éléments capillaires (30) entre les faces d'assemblage des pièces en matériau composite,
- placement d'une composition de brasure (41) en contact avec une partie des éléments capillaires (30),
- traitement thermique pour liquéfier la composition de brasure (41) de manière à répartir par capillarité la composition de brasure fondue entre les faces d'assemblage (10a, 20a) des pièces en matériau composite,
**caractérisé en ce qu'**une pluralité de rainures (501) est réalisée sur la face d'assemblage (50a) d'au moins une des deux pièces (50) en matériau composite, au moins une partie desdites rainures (501) comportant des perforations (502) débouchant sur la face opposée (50d) à la face d'assemblage de la pièce.

2. Procédé selon la revendication 1, **caractérisé en ce qu'**une pluralité de rainures est réalisée sur la face d'assemblage (10a ; 20a) d'au moins une des deux pièces (10 ; 20) en matériau composite, au moins une partie desdites rainures débouchant sur une ou plusieurs faces adjacentes à la face d'assemblage de la pièce.

3. Procédé selon la revendication 2, **caractérisé en ce qu'**au moins une partie des rainures (101 ; 201) s'étend sur la face d'assemblage (10a ; 20a) de la pièce (10 ; 20) suivant une direction déterminée perpendiculaire à la direction des efforts auxquels la pièce est destinée à être soumise.

4. Procédé selon l'une quelconque des revendications 2 ou 3, **caractérisé en ce qu'**une partie des rainures (601, 602) s'étend sur la face d'assemblage (60a) de la pièce (60) suivant deux directions déterminées perpendiculaires l'une par rapport à l'autre.

5. Procédé selon l'une quelconque des revendications 1 à 4, **caractérisé en ce qu'**une pluralité de perforations (801 ; 901) est réalisée sur la face d'assemblage (80a ; 90a) d'au moins une des deux pièces (80, 90) en matériau composite, au moins une partie desdites perforations débouchant sur la face opposée (80d ; 90d) à la face d'assemblage de la pièce.

6. Procédé selon l'une quelconque des revendications 1 à 5, **caractérisé en ce que** les éléments capillaires (30) sont choisis parmi au moins un des éléments suivants : particules de SiC, voile de SiC, mat de carbone, particules de carbone et nanotubes de carbone.

7. Procédé selon l'une quelconque des revendications 1 à 6, **caractérisé en ce que** les pièces en matériau composite à assembler par brasage sont des pièces d'arrière-corps de moteur aéronautique.

8. Procédé selon l'une quelconque des revendications 1 à 7, **caractérisé en ce que** la composition de brasure est une composition métallique.

## Patentansprüche

1. Verfahren zur Lötverbindung von zwei Teilen (10, 20) aus Keramikmatrix-Verbundwerkstoff (CMC), wobei jedes Teil eine Verbindungsfläche (10a, 20a) aufweist, die dazu bestimmt ist, mit der Verbindungsfläche des anderen Teils verlötet zu werden, wobei das Verfahren die folgenden Schritte umfasst:
- Herstellen einer Vielzahl von Hohlräumen (101; 201) auf der Verbindungsfläche (10a; 20a) von wenigstens einem der beiden Teile (10; 20) aus Verbundwerkstoff, wobei wenigstens ein Teil der Hohlräume an einem oder mehreren Teilen (10b, 10c; 20b, 20c) des Teils, welche außerhalb der Verbindungsfläche gelegen sind, ausmündet,
- Einfügen von Kapillarelementen (30) zwischen den Verbindungsflächen der Verbundwerkstoffteile,
- Anbringen einer Lötzusammensetzung (41) in Kontakt mit einem Teil der Kapillarelemente (30),
- Wärmebehandlung, um die Lötzusammensetzung (41) zu verflüssigen, so dass die geschmolzene Lötzusammensetzung durch Kapillarwirkung zwischen den Verbindungsflächen (10a, 20a) der Verbundwerkstoffteile verteilt wird,
**dadurch gekennzeichnet, dass** eine Vielzahl von Nuten (501) auf der Verbindungsfläche (50a) von wenigstens einem der beiden Teile (50) aus Verbundwerkstoff ausgebildet wird, wobei wenigstens ein Teil der Nuten (501) Löcher (502) aufweist, die an der der Verbindungsfläche des Teils gegenüberliegenden Seite (50d) ausmünden.

2. Verfahren nach Anspruch 1, **dadurch gekennzeichnet, dass** eine Vielzahl von Nuten auf der Verbindungsfläche (10a; 20a) von wenigstens einem der beiden Teile (10; 20) aus Verbundwerkstoff ausgebildet ist, wobei wenigstens ein Teil der Nuten an einer oder mehreren zu der Verbindungsfläche des Teils benachbarten Seiten ausmündet.

3. Verfahren nach Anspruch 2, **dadurch gekennzeichnet, dass** wenigstens ein Teil der Nuten (101; 201) sich auf der Verbindungsfläche (10a; 20a) des Teils (10; 20) in einer bestimmten Richtung senkrecht zu der Richtung der Kräfte, denen das Teil ausgesetzt werden soll, erstreckt.

4. Verfahren nach einem der Ansprüche 2 oder 3, **dadurch gekennzeichnet, dass** ein Teil der Nuten (601, 602) sich auf der Verbindungsfläche (60a) des Teils (60) in zwei bestimmten, senkrecht zueinander verlaufenden Richtungen erstreckt.

5. Verfahren nach einem der Ansprüche 1 bis 4, **dadurch gekennzeichnet, dass** eine Vielzahl von Löchern (801; 901) auf der Verbindungsfläche (80a; 90a) von wenigstens einem der beiden Teile (80, 90) aus Verbundwerkstoff ausgebildet ist, wobei wenigstens ein Teil der Löcher an der der Verbindungsfläche des Teils gegenüberliegenden Seite (80d; 90d) ausmündet.

6. Verfahren nach einem der Ansprüche 1 bis 5, **dadurch gekennzeichnet, dass** die Kapillarelemente (30) aus wenigstens einem der folgenden Elemente ausgewählt sind: SiC-Teilchen, SiC-Tuch, Kohlenstoffmatte, Kohlenstoffteilchen und Kohlenstoff-Nanoröhrchen.

7. Verfahren nach einem der Ansprüche 1 bis 6, **dadurch gekennzeichnet, dass** die miteinander zu verlötenden Verbundwerkstoffteile Heckteilstücke eines Flugzeugtriebwerks sind.

8. Verfahren nach einem der Ansprüche 1 bis 7, **dadurch gekennzeichnet, dass** die Lötzusammensetzung eine metallische Zusammensetzung ist.

## Claims

1. A method of assembling together by brazing two parts (10, 20) made of ceramic matrix composite (CMC) material, each part having an assembly face (10a, 20a) for brazing with the assembly face of the other part, the method comprising the following steps:
• making a plurality of cavities (101; 201) in the assembly face (10a; 20a) of at least one of the two composite material parts (10; 20), at least some of said cavities opening out into one or more portions (10b, 10c; 20b, 20c) of the part that are situated outside the assembly face;
• interposing capillary elements (30) between the assembly faces of the composite material parts;
• placing a brazing composition (41) in contact with a portion of the capillary elements (30); and
• applying heat treatment to liquefy the brazing composition (41) so as to cause the molten brazing composition to spread by capillarity between the assembly faces (10a, 20a) of the composite material parts, **characterized in that** a plurality of grooves (501) are made in the assembly face (50a) of at least one of the two composite material parts (50), at least some of said grooves (501) including perforations (502) opening out into the face (50d) opposite from the assembly face of the part.

2. A method according to claim 1, **characterized in that** a plurality of grooves are made in the assembly face (10a; 20a) of at least one of the two composite material parts (10; 20), at least some of said grooves opening out into one or more faces adjacent to the assembly face of the part.

3. A method according to claim 2, **characterized in that** at least some of the grooves (101; 201) extend over the assembly face (10a; 20a) of the part (10; 20) in a determined direction that is perpendicular to the direction of the forces to which the part is to be subjected.

4. A method according to any one of claims 2 or 3, **characterized in that** some of the grooves (601, 602) extend in the assembly face (60a) of the part (60) in two determined directions that are perpendicular to each other.

5. A method according to any one of claims 1 to 4, **characterized in that** a plurality of perforations (801; 901) are made in the assembly face (80a; 90a) of at least one of the two composite material parts (80, 90), at least some of said perforations opening out into the face (80d; 90d) opposite from the assembly face of the part.

6. A method according to any one of claims 1 to 5, **characterized in that** the capillary elements (30) are selected from at least one of the following elements:
particles of SiC, a web of SiC, a mat of carbon,
particles of carbon, and nanotubes of carbon.

7. A method according to any one of claims 1 to 6, **characterized in that** the composite material parts for assembling together by brazing are afterbody parts of an aeroengine.

8. A method according to any one of claims 1 to 7, **characterized in that** the brazing composition is a metallic composition.
